# EUROPÄISCHE PATENTANMELDUNG

(11) **EP 0 665 096 A1**
(43) Veröffentlichungstag der Anmeldung: **02.08.1995**
(21) Anmeldenummer: 95100568.5
(22) Anmeldetag: 17.01.1995
(51) Int. Cl.: B29C 65/18

(54) **Füllerartige elektrische Heissversiegelungsvorrichtung**

(30) Priorität: 27.01.1994 DE 4402452
(71) Anmelder: Chou, Ammy, Taipei Hsien, Taiwan (TW)
(72) Erfinder: Chou, Ammy, Taipei Hsien, Taiwan (TW)
(74) Vertreter: Zeitler & Dickel

(57) **Zusammenfassung**

Eine füllerartige elektrische Heißversiegelungsvorrichtung weist eine Stromversorgungseinheit (3) auf, die an einem Ende mit einer Fassung (2) verbunden ist, um Trockenbatteriezellen (4, 4') sowie eine elektrische Heißversiegelungseinheit (5) zu haltern. Die elektrische Heißversiegelungseinheit (5) ist von der Bodenwand (34) der Stromversorgungseinheit (3) getrennt. Weiterhin ist die Fassung (2) von einer Kappe (7) mit einem Befestigungsclip (70) bedeckt. Die elektrische Heißversiegelungseinheit (5) ist elektrisch mit der Stromversorgungseinheit (3) verbunden, um die Versiegelungswärme zu erzeugen, wenn sie auf das zu versiegelnde Werkstück gedrückt wird. Die elektrische Heißversiegelungseinheit (5) ist von der Stromversorgungseinheit (3) elektrisch getrennt, um die Wärmeerzeugung zu beenden, wenn der Druck aufgehoben wird.

## Beschreibung

Die Erfindung betrifft eine Heißversiegelungsvorrichtung gemäß dem Oberbegriff des Patentanspruches 1. Insbesondere betrifft die Erfindung eine füllerartige elektrische Heißversiegelungsvorrichtung zum Wärmeversiegeln von Polyäthylenbeuteln etc.

Für industrielle und häusliche Zwecke ist eine Vielzahl elektrischer Heißversiegelungsvorrichtungen bekannt. Hierbei sind insbesondere elektrische Heißversiegelungsvorrichtungen in der Form von Büroheftgeräten beliebt. Heißversiegelungsvorrichtungen dieser Art sind in der US-PS 5,142,123 und JP-PS 63-57206 dargestellt und weisen ein Gehäuse in der Form eines Büroheftgerätes auf. Da eine elektrische Heißversiegelungsvorrichtung in der Art eines Bürohefters jedoch viel Aufbewahrungsplatz benötigt, kann sie nicht ohne weiteres als persönliches Accessoir mitgenommen werden. Ein weiterer Nachteil einer derartigen Heißversiegelungsvorrichtung besteht darin, daß die Klebe- bzw. Schmelzaktion zweimal durchgeführt werden muß, wenn die offene Seite eines Polyäthylenbeutels versiegelt werden soll. In diesem Fall wird die offene Seite des Polyäthylenbeutels in einer Hand gehalten, während mit der anderen Hand die elektrische Heißversiegelungsvorrichtung gehalten wird, um den Beutel zu versiegeln. Der Eckenbereich der offenen Seite des Polyäthylenbeutels muß daher später versiegelt werden.

Der Erfindung liegt daher die Aufgabe zugrunde, die vorerwähnten Nachteile zu vermeiden und eine elektrische Heißversiegelungsvorrichtung zu schaffen, die in einfacher Weise wie ein Füller verwendet und mitgenommen werden kann und die zur Erzeugung von Versiegelungswärme automatisch eingeschaltet wird, wenn sie auf das zu versiegelnde Werkstück aufgedrückt wird, oder zum Abschalten der Wärmeerzeugung ausgeschaltet wird, wenn sie vom Werkstück abgehoben wird.

Diese Aufgabe wird erfindungsgemäß durch die Merkmale des Anspruches 1 gelöst. Vorteilhafte Ausführungsformen der Erfindung sind in den weiteren Ansprüchen beschrieben.

Die vorliegende Erfindung verwendet eine Spiralfeder, um die elektrische Wärmeeinheit von der Gleichstrom-Versorgungseinheit zu trennen. Wird das vordere Ende der elektrischen Wärmeeinheit auf das Werkstück gedrückt und damit die Spiralfeder zusammengedrückt, werden die elektrischen Kontakte auf der elektrischen Wärmeeinheit elektrisch mit den beiden gegenüberliegenden Kontakten der Gleichstrom-Versorgungseinheit verbunden, wodurch die elektrische Wärmeeinheit eingeschaltet wird. Wird die elektrische Wärmeeinheit vom Werkstück abgehoben, drückt die Spiralfeder unmittelbar die Kontakte der elektrischen Wärmeeinheit von den Kontakten der Gleichstrom-Versorgungseinheit weg. Das zylindrische Gehäuse der füllerartigen elektrischen Heißversiegelungsvorrichtung weist eine Kappe mit einem Clip auf, so daß sie auf bequeme Weise an einer Tasche eingehängt werden kann.

Die Erfindung wird nachfolgend anhand der Zeichnung beispielsweise näher erläutert. In dieser zeigen:
- Fig. 1: eine Explosionsdarstellung einer füllerartigen elektrischen Heißversiegelungsvorrichtung gemäß der Erfindung,
- Fig. 2: eine Seitenansicht der füllerartigen elektrischen Heißversiegelungsvorrichtung,
- Fig. 3: einen Längsschnitt der füllerartigen elektrischen Heißversiegelungsvorrichtung,
- Fig. 4: einen Teilschnitt der füllerartigen elektrischen Heißversiegelungsvorrichtung, wobei die Metallklemmen der elektrischen Heißversiegelungseinheit von den Kontakten der Metallkontaktplatten getrennt sind,
- Fig. 5: einen Teilschnitt ähnlich zu Fig. 4, wobei die Metallklemmen mit den Kontakten der Metallkontaktplatten elektrisch verbunden sind,
- Fig. 6: eine schematische Darstellung der füllerartigen elektrischen Heißversiegelungsvorrichtung, die an einer Tasche mittels eines auf ihrer Kappe vorgesehenen Clips befestigt ist,
- Fig. 7: eine schematische Darstellung der Erfindung beim Versiegeln der offenen Seite eines Polyäthylenbeutels in einem einzigen Durchgang,
- Fig. 8: einen Längsschnitt einer alternativen Ausführungsform des Gehäuses der erfindungsgemäßen füllerartigen elektrischen Heißversiegelungsvor-richtung,
- Fig. 9: eine weitere Ausführungsform der Erfindung mit einer eingebetteten rostfreien Kugel für die Versiegelungsspitze,
- Fig. 10: eine weitere Ausführungsform der Erfindung mit einer Rolle für die Versiegelungsspitze,
- Fig. 10A: einen Querschnitt entlang der Linie 10A-10A von Fig. 10 und
- Fig. 11: eine weitere Ausführungsform der Erfindung mit einer Winkelform am Versiegelungsspitzenende des Füllers.

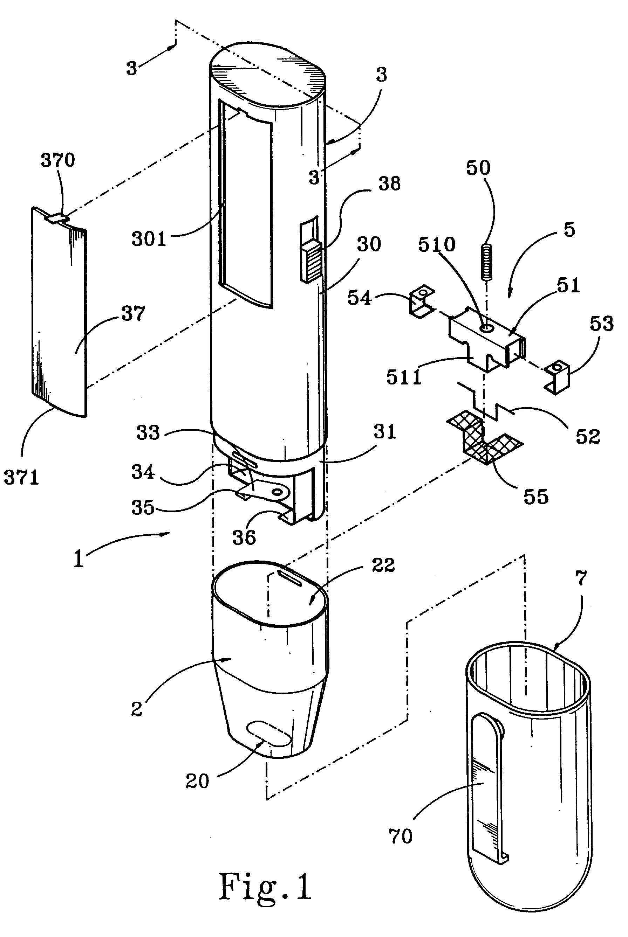

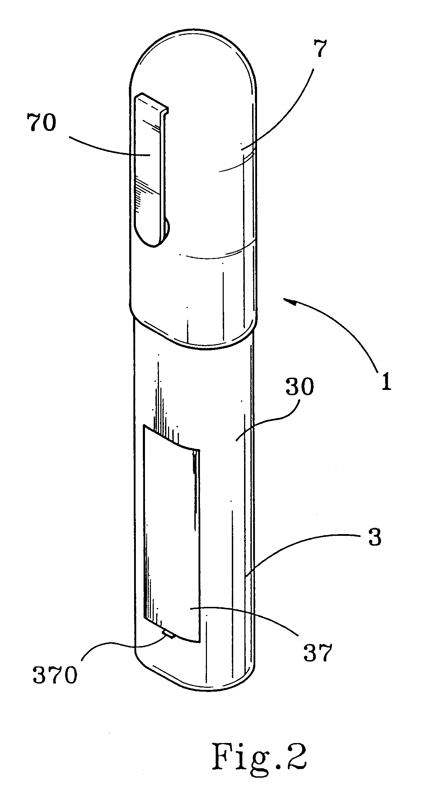

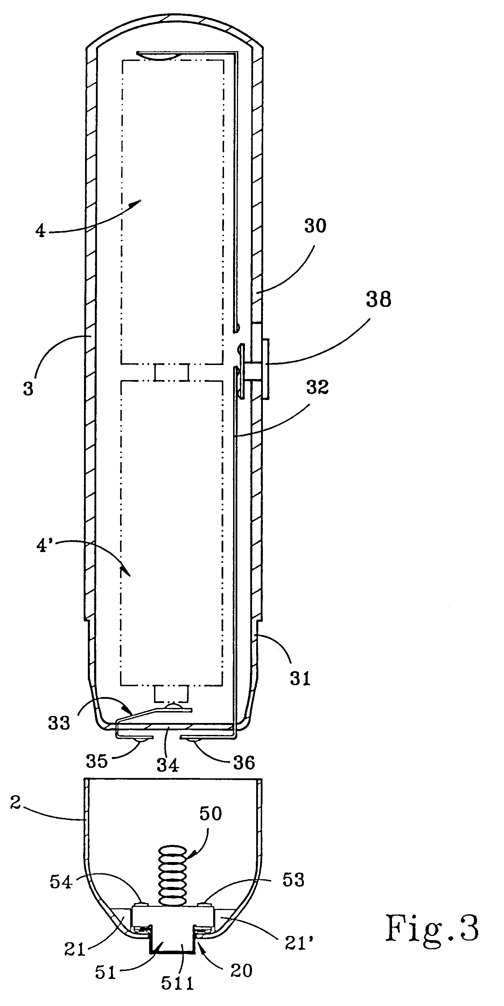

Wie aus Fig. 1 bis 3 ersichtlich, weist eine füllerartige elektrische Heißversiegelungsvorrichtung gemäß einer bevorzugten Ausführungsform der Erfindung ein in der Hand zu haltendes, zylindrisches Gehäuse 1 in der Form eines Füllers auf. Das zylindrische Gehäuse 1 besteht aus einer Stromversorgungseinheit 3 und einer elektrischen Heißversiegelungseinheit 5, die in Längsrichtung mit der Stromversorgungseinheit 3 an einem Ende verbunden ist. Die Stromversorgungseinheit 3 besteht aus einer zylindrischen Batteriekammer 30, die zwei in Reihe geschaltete Trockenbatteriezellen 4, 4' aufnimmt (siehe Fig. 3), sowie aus einem zylindrischen Verbindungsansatz 31 mit einem relativ kleineren Außendurchmesser. Der Verbindungsansatz erstreckt sich von einem Ende der Batteriekammer 30 aus, um die elektrische Heißversiegelungseinheit 5 bündig zu verbinden.

Die Batteriekammer 30 weist eine Öffnung 301 auf, um die Trockenbatteriezellen 4, 4' einsetzen zu können, sowie einen Batteriedeckel 37, der lösbar auf die Öffnung 301 aufgesetzt ist. Der Batteriedeckel 37 weist zwei Halter 370, 371 an seinen beiden gegenüberliegenden Enden zur Befestigung an der Öffnung 301 auf.

Die Stromversorgungseinheit 3 weist zwei Metallkontaktplatten 32, 33 mit jeweils einem Ende auf, das mit einem Pol der Trockenbatteriezellen 4, 4' verbunden ist, sowie mit jeweils einem gegenüberliegenden Ende, das sich über die Bodenwand 34 der Batteriekammer 30 hinauserstreckt und im entsprechenden Kontakt 36 oder 35 endet. Eine Metallkontaktplatte 32 ist in Reihe mit einem Stromschalter 38 für die EIN/AUS-Schaltsteuerung verbunden. Die Bodenwand 34 der Batteriekammer 30 besteht aus einer Teilungswand zwischen der Batteriekammer 30 und dem Verbindungsansatz 31.

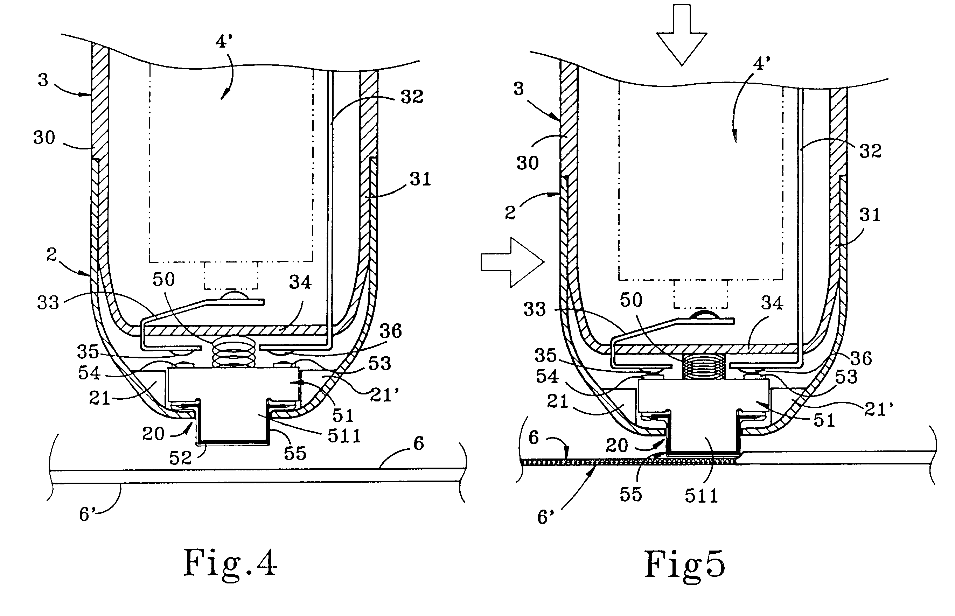

Die elektrische Heißversiegelungseinheit 5 ist in einer Fassung 2 aufgenommen. Die Fassung 2 weist ein oberes offenes Ende 22 mit einem relativ größeren Durchmesser auf, in den der Verbindungsansatz 31 paßt, sowie ein bodenseitiges, offenes Ende mit einem relativ kleineren Durchmesser, das an einer kleinen Öffnung 20 endet. Die elektrische Heißversiegelungseinheit 5 weist eine Basis 51 mit einem oberen zentralen Loch 510 und einer konvex gekrümmten Versiegelungsspitze 511 auf, eine Spiralfeder 50 mit einem Ende, das in das Loch 510 der Basis 51 eingeführt ist, und mit einem gegenüberliegenden Ende, das an der Bodenwand 34 der Batteriekammer 30 anliegt (siehe auch Fig. 4), zwei Metallklemmen 53, 54, die zweiseitig an der oberen Seite der Basis 51 befestigt sind, einen elektrischen Heizdraht 52, der zwischen den Metallklemmen 53, 54 angebracht und mit dem bodenseitigen Rand des bodenseitigen vorstehenden Blocks 511 befestigt ist, der durch die Öffnung 20 hindurch außerhalb der Fassung 2 angeordnet ist, sowie eine Schutzschicht aus hitzebeständigen Fasern 55, die zum Schutz über den elektrischen Heizdraht 52 gelegt ist.

Wie aus Fig. 4 ersichtlich, ist die elektrische Heißversiegelungseinheit 5 innerhalb der Fassung 2 zwischen zwei Halteblöcken 21, 21' gehalten, wobei die Spiralfeder 50 an der Bodenwand 34 der Batteriekammer 30 anliegt. Die Metallklemmen 53, 54 sind unterhalb der Kontakte 36, 35 entsprechend beabstandet. Die Halteblöcke 21, 21' führen die Bewegung der elektrischen Heißversiegelungseinheit 5 entlang der Längsachse des Gehäuses 1.

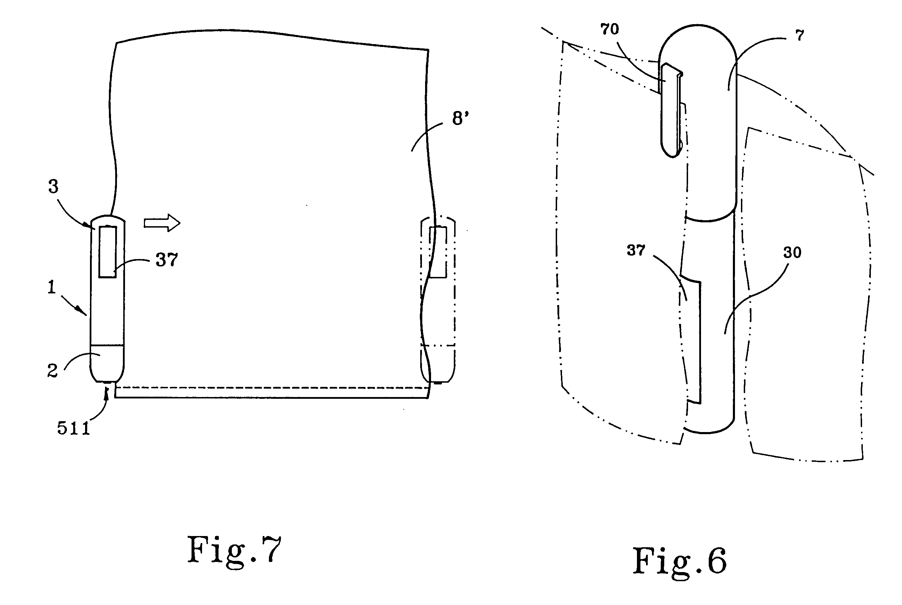

Ist der Schalter 38, wie aus Fig. 5 ersichtlich, eingeschaltet, und wird die konvex gekrümmte Versiegelungsspitze 511 der elektrischen Heißversiegelungseinheit 5 auf die zu versiegelnden Plastikfolien 6, 6' gedrückt und auf diesen verschoben, werden die Metallklemmen 53, 54 entsprechend mit den Kontakten 36, 35 zur elektrischen Verbindung des elektrischen Schaltkreises verbunden. Hierdurch wird der elektrische Heizdraht 52 aufgeheizt, so daß er durch die Schutzschicht aus hitzebeständigen Fasern 55 hindurch Wärme abgibt, um die Plastikfolien 6, 6' zu versiegeln. Sobald die Versiegelungsspitze 511 der elektrischen Heißversiegelungseinheit 5 von den Plastikfolien 6, 6' entfernt wird, drückt die Spiralfeder 50 die Basis 51 sofort nach außen, wodurch die Metallklemmen 53, 54 von den Kontakten 36, 35 getrennt werden, um den elektrischen Schaltkreis zu unterbrechen. Die füllerartige elektrische Heißversiegelungsvorrichtung ist daher so einfach wie ein Füller zu bedienen.

Wie aus Fig. 6 und 1 ersichtlich, ist eine Kappe 7 mit einem Clip 70 vorgesehen, die die Fassung 2 und die elektrische Heißversiegelungseinheit 5 bedeckt, wenn die füllerartige elektrische Heißversiegelungsvorrichtung nicht in Gebrauch ist. Mittels des Clips 70 kann die füllerartige elektrische Heißversiegelungsvorrichtung an einer Tasche befestigt werden.

Wie aus Fig. 7 ersichtlich, kann das Versiegeln der offenen Seite eines Polyäthylenbeutels in einem Durchgang durchgeführt werden, da die füllerartige elektrische Versiegelungsvorrichtung so einfach wie ein Füller verwendet werden kann.

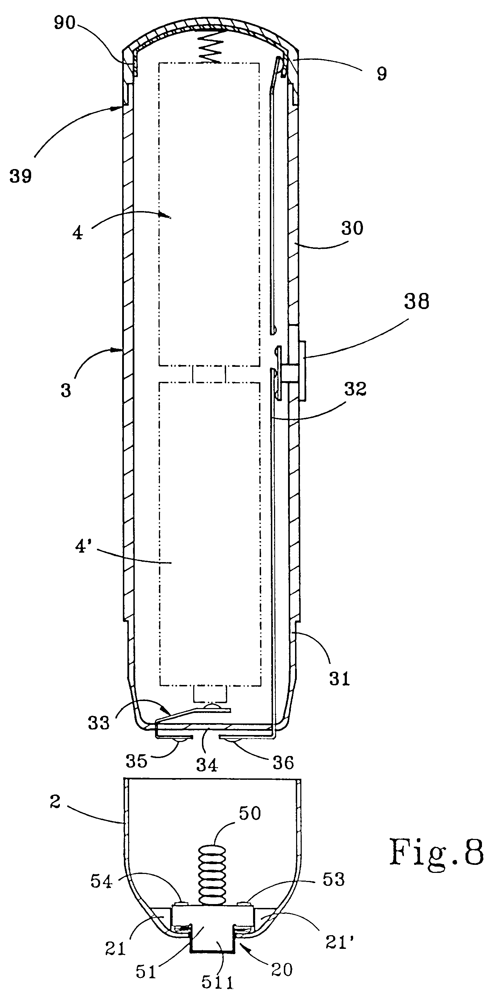

In Fig. 8 ist eine alternative Form einer Stromversorgungseinheit 3 dargestellt. Die Batteriekammer 30 der Stromversorgungseinheit 3 umfaßt eine mit einer Endkappe 9 bedeckte hintere Öffnung 39 zum Einlegen der Trockenbatteriezellen 4, 4'. Die Endkappe 9 weist auf ihrer Innenseite einen Leiter 90 auf. Ist die Endkappe 9 auf der Batteriekammer 30 der Stromversorgungseinheit 3 befestigt, bilden der Leiter 90 und die Metallkontakte 32, 33 und die Trockenbatteriezellen 4, 4' einen geschlossenen Schaltkreis. Eine derartige Anordnung ersetzt die vorerwähnte Öffnung 301 und den Batteriedeckel 37, um die Trockenbatteriezellen 4, 4' einfach einlegen zu können.

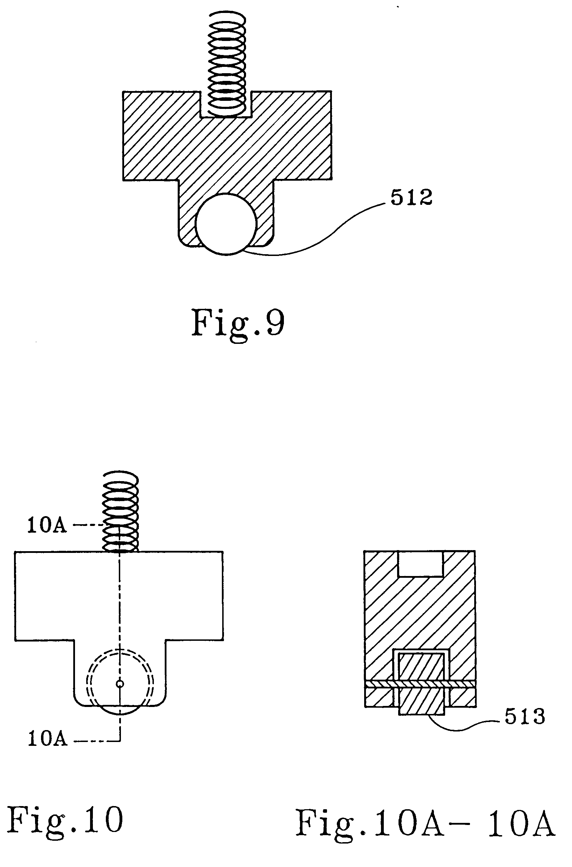

In Fig. 9 ist eine weitere Ausführungsform der Erfindung dargestellt, die eine eingebettete rostfreie Kugel 512 für die Versiegelungsspitze verwendet. Der Hauptzweck für die Verwendung einer eingebetteten, rostfreien Kugel für die Versiegelungsspitze besteht darin, die Reibung zwischen der Versiegelungsspitze und den Plastikfolien zu vermindern, d.h., die Gleitreibung in eine Rollreibung zu verändern, so daß das Verkratzen oder Einreißen der Plastikfolien vermieden werden kann. Die Kugelspitze kann weiterhin bei Versiegelungspfaden mit kleinen Krümmungen nützlich sein.

In Fig. 10 und 10A ist eine weitere Ausführungsform der Erfindung dargestellt, die ähnlich zu Fig. 9 ist, jedoch eine Rolle 513 als Versiegelungsspitze verwendet. Der Hauptzweck einer Rolle besteht darin, die Reibung zu vermindern und den Versiegelungspfad zu verbreitern. Ferner können in die Rollfläche der Rolle 513 Warenzeichen, Werbewörter oder Muster zur Verschönerung oder zur Verbesserung des Werbeeffekts eingeprägt werden.

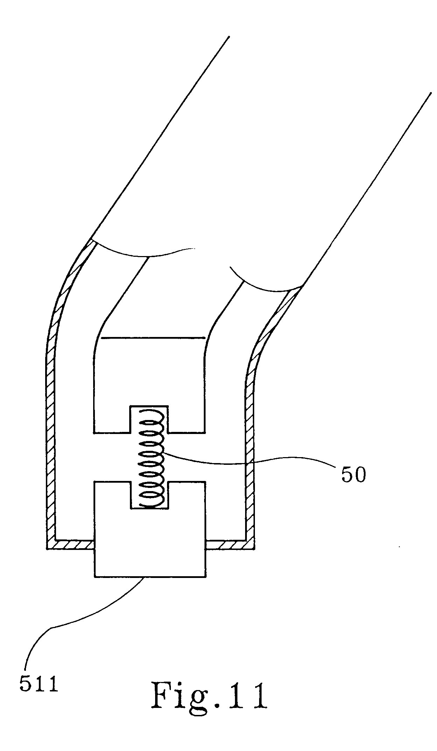

In Fig. 11 ist eine weitere Ausführungsform der Erfindung dargestellt, die aufgrund einer winkelförmigen Ausbildung geeignet in der Hand gehalten und bei engen Arbeitsraumverhältnissen verwendet werden kann.

## Patentansprüche

1. Elektrische Heißversiegelungsvorrichtung,
**gekennzeichnet durch**
ein zylindrisches Gehäuse (1), das an einem Ende mit einer Fassung (2) verbunden ist, um eine Stromversorgungseinheit (3) und eine elektrische Heißversiegelungseinheit (5) zu haltern, eine Schutzkappe (7), die lösbar auf der Fassung (2) über der elektrischen Heißversiegelungseinheit (5) anordenbar ist, wobei die elektrische Heißversiegelungseinheit (5) eine Heißversiegelungsspitze (511) aufweist, die sich zum Versiegeln aus der Fassung (2) durch ein daran vorgesehenes Loch (20) hindurch hinauserstreckt, ein elektrisches Heizelement (52), das um die Heißversiegelungsspitze (511) herum angebracht ist, und ein Federmittel (50), das zwischen der elektrischen Heißversiegelungseinheit (5) und dem zylindrischen Gehäuse (1) gehaltert ist, wobei die Kappe (7) einen einheitlichen Befestigungsclip (70) aufweist und wobei durch Drücken der Heißversiegelungsspitze (511) der elektrischen Heißversiegelungseinheit (5) auf ein Werkstück (6, 6') das elektrische Heizelement (52) elektrisch angeschlossen ist, um Wärme zu erzeugen, während durch ein Lösen der Heißversiegelungsspitze (511) vom Werkstück (6, 6') das elektrische Heizelement (52) elektrisch getrennt ist.

2. Vorrichtung nach Anspruch 1, dadurch gekennzeichnet, daß die Fassung (2) eine konische Form aufweist.

3. Vorrichtung nach Anspruch 1 oder 2, dadurch gekennzeichnet, daß die Stromversorgungseinheit (3) einen Schalter (38) für die Ein- und Ausschaltsteuerung des Stroms aufweist.

4. Elektrische Heißversiegelungsvorrichtung, die zum Halten in der Hand geeignet, in sich abgeschlossen und batteriebetrieben ist, dadurch gekennzeichnet, daß die Vorrichtung ein derart ausgestaltetes Gehäuse (1) aufweist, daß es auf einfache Weise in der Art eines Füllers gehalten werden kann.

5. Vorrichtung nach Anspruch 4, dadurch gekennzeichnet, daß das Gehäuse (1) wenigstens eine Batterie (4) zur Energieversorgung der Heißversiegelungsmittel einschließt, und daß druckbetätigbare Schaltmittel vorgesehen sind, die die Batterie (4) mit dem Heißversiegelungsmittel kuppeln.

6. Vorrichtung nach einem der vorhergehenden Ansprüche, dadurch gekennzeichnet, daß eine Schutzkappe (7) auf dem Gehäuse (1) über der Heißversiegelungsspitze (511) lösbar befestigt ist.

7. Vorrichtung nach Anspruch 6, dadurch gekennzeichnet, daß die Kappe (7) einen Clip (70) zum Haltern der Heißversiegelungsvorrichtung aufweist, während diese nicht in Gebrauch ist.

8. Vorrichtung nach einem der vorhergehenden Ansprüche, dadurch gekennzeichnet, daß die druckbetätigbaren Schaltmittel Mittel aufweisen, um die Heißversiegelungseinheit (5) federnd in die offene Position der Schaltmittel vorzuspannen.

9. Vorrichtung nach einem der vorhergehenden Ansprüche, dadurch gekennzeichnet, daß ein elektrischer EIN/AUS-Stromschalter (38) vorgesehen ist, der zwischen der Batteriestromversorgung (3) und den druckbetätigbaren Schaltmitteln angeschlossen ist.

10. Vorrichtung nach einem der vorhergehenden Ansprüche, dadurch gekennzeichnet, daß die Versiegelungsspitze (511) als eingebettete, rostfreie Kugel (512) ausgebildet ist.

11. Vorrichtung nach einem der Ansprüche 1 bis 9, dadurch gekennzeichnet, daß die Versiegelungsspitze (511) als Rolle (513) ausgebildet ist und in der Rollfläche der Rolle Zeichen, Werbewörter oder Muster eingeprägt sind.

12. Vorrichtung nach einem der vorhergehenden Ansprüche, dadurch gekennzeichnet, daß das Gehäuse (1) einen winkelförmigen Aufbau am Versiegelungsspitzenende aufweist.
